# EUROPEAN PATENT APPLICATION

(11) **EP 1 633 137 A1**
(43) Date of publication of application: **08.03.2006**
(21) Application number: 04733088.1
(22) Date of filing: 14.05.2004
(51) Int. Cl.: H04N 5/92

(54) **INFORMATION RECORDING DEVICE, INFORMATION OUTPUT DEVICE, INFORMATION RECORDING PROGRAM, INFORMATION OUTPUT PROGRAM, RECORDING MEDIUM, AND INFORMATION RECORDING MEDIUM**

(30) Priority: 14.05.2003 JP 2003136630
(71) Applicant: Pioneer Corporation, Tokyo 153-8654 (JP)
(72) Inventor: TADA, Kenichiro, c/o Pioneer Corporation, Tokorozawa-shi, Saitama 3590047 (JP)
(74) Representative: Tappe, Hartmut
(86) International application number: PCT/JP2004/006552
(87) International publication number: WO 2005/004474

(57) **Abstract**

When a partial TS as a part of TS is recorded in a hard disc HD, a microcomputer section 14 structures the partial TS essentially including only a partial TS descriptor and a network identification descriptor as SIT in descriptors to be included as SIT for the partial TS, the partial TS is recorded in the hard disc HD, and the partial TS descriptor and the network identification descriptor are recorded in another areas in the hard disc HD.

At the time of output, while the partial TS is being replenished with the descriptors recorded in the other areas, SIT is structured so as to include descriptors having sufficient contents for the partial TS.

## Description

### TECHNICAL FIELD

The present invention relates to an information recording apparatus, a recording medium reproducing apparatus, an information recording program, a recording medium reproducing program, a recording medium and an information recording medium. More concretely, the invention relates to the information recording apparatus and the information recording program which record a dynamic picture image input externally into a recording medium, the recording medium in which the dynamic picture image is recorded, the recording medium reproducing apparatus and the recording medium reproducing program which reproduce the recording medium, and the information recording medium in which the information recording program or the recording medium reproducing program is recorded.

### BACKGROUND ART

In recent years, digital broadcasting such as so-called digital high vision broadcasting is starting. As recording density of recording media tends to be heightened recently, recorders and the like, which can receive digital broadcasting with originally high image quality and can record dynamic picture images and the like included in the received digital information in optical discs or hard discs, are being marketed.

Generally in the digital broadcasting, since different programs are broadcasted in a lot of channels, users of the recorders or the like select and extract only desired programs from the programs in the received digital broadcasting so as to record them.

On the other hand, in the digital broadcasting, dynamic picture images are generally compressed to be broadcasted, and so-called MPEG (Motion Picture Expert Group) system is admitted as the international standard of the compressing system. In the digital broadcasting, a so-called transport stream (hereinafter, suitably TS) system is adopted in the MPEG system as the dynamic picture image broadcasting (distributing) system.

At this time, in the case where the user selects and records a desired program from broadcasting programs, a part of the digital broadcasting using TS is extracted to be recorded. The extracted part of TS is, however, utilized as "partial TS" in ARIB standards developed by Association of Radio Industries and Businesses as the standards with which the digital broadcasting complies, and the extracted part of TS is recorded as the partial TS (in other words, according to a format standardized as partial TS) in an optical disc or the like.

The Association of Radio Industries and Businesses is specified as "the center for promotion of efficient use of the radio spectrum" defined according to Radio Law by Minister of Public Management, Home Affairs, Posts and Telecommunications. This association performs services such as survey researches, research and development and technological examination relating to the efficient use of radio spectrum in cooperation with the other standardization organizations in communications and broadcasting. The formal nomenclature of the ARIB standard according to the present invention is "ARIB STD-B21, version 3.1", and the written standards describing the ARIB standards are publicly known document which is generally marketed.

In the ARIB standards, currently the following three points are standardized as attributes of the partial TS.
(1) PMT (Program Map Table) to be carried to PSI (Program Specific Information) as program characteristic information including so-called program attribute information and the like which is standardized as components of TS in the MPEG standards includes only one program.
(2) Only SIT (Selection Information Table) and DIT (Description Information Table) as tables composed of SI (Service Information) representing attributes of digital broadcasting, program arrangements and the like in various attribute information defined by the ARIB standards as the attribute information and the like to be included in TS are defined.
(3) The attributes of the partial TS do not include packets other than dynamic picture image information as entity portion of the program, SIT and DIT.

As to a concrete process for receiving the digital information and fetching the necessary partial TS, information for structuring the SIT is extracted from various pieces of information included in SI in the received digital broadcasting (for example, NIT (Network Information Table), EIT (Event Information Table), SDT (Service Description Information Table) and BIT (Broadcaster Information Table)) and the SIT is structured. Further, the SIT structured once per three seconds on reproduction time axis of the partial TS should be inserted into the partial TS according to the ARIB standards.

More concretely, the conventional process for generating a partial TS from TS is explained. In order to create a partial TS from original TS, it is necessary to newly create the PSI representing contents of a program selected as the partial TS.

That is to say, in order to create new PSI for new partial TS, the contents of PAT (Program Association Table) and PMT included in original TS should be replaced with PAT and PMT having contents representing only the selected program so as to be included in the partial TS. For this reason, it is necessary that a receiving section which receives TS as the digital broadcasting is set so as to acquire PAT and PMT, notifies the acquiring of necessary PAT and PMT to CPU or the like, and stores the acquired PAT and PMT in an area of a register or the like which is accessible from CPU.

After the acquiring of PAT and PMT is posited, the CPU detects and analyzes information in the area where PAT and PMT are stored, and saves PAT and PMT necessary for creating partial TS including only the selected program. The CPU exchanges the saved (for exchanging) PAT and PMT for PAT and PMT included in original TS so as to create partial TS including new PSI.

A process for changing SI at the time of creating partial TS is explained below.

As mentioned above, in partial TS which is newly created, SI which is included in EIT, NIT or SDT in original TS is included in only the SIT to be transported. For this reason, it is necessary to complete structuring of new SIT and various setting for enabling the structured SIT to be inserted into the partial TS until three seconds which is a retransmission period of SIT standardized by the ARIB standards passes.

More concretely, in the case where SI included in the EIT, for example, is tried to be included in SIT on the partial TS, since the retransmission period of the EIT in original TS is set to 2 seconds, it is considered that the time which can be provided for structuring new SIT is occasionally less than 1 second according to a receiving state of original TS.

Meanwhile, the retransmission period of some original TS is 10 seconds, namely, long like NIT, for example.

The process for creating new SIT, therefore, requires so-called real time characteristics, and thus an efficient process is necessary.

On the other hand, it is occasionally necessary to change a method of inserting SIT depending on the situation according to an amount of information in newly structured SIT.

That is to say, in the ARIB standards, an amount of section selecting information to be transmitted in SIT on the partial TS can be maximally 4096 bytes, but about twenty SITs are necessary for transmitting the section selecting information. These SITs should be inserted repeatedly with intervals of 3 seconds in the partial TS accurately.

At this time, an example of a method of specifying positions in the partial TS where these SITs can be inserted (for example, positions on the reproduction time axis) is a method of operating an internal timer or the like in order to search a gap in arrival time of a TS packet included in original TS. For this reason, when the original TS is received, it is necessary that a table for transmitting SI of the EIT or the NIT is extracted and acquired from original TS, the acquiring is notified to CPU, and information transmitted as the respective acquired tables is stored in an area of a register or the like which is accessible from CPU.

After the SI is stored and the acquiring of SI is notified, the CPU detects and analyzes information in the area of the register or the like where the information about SI is stored, and extracts a descriptor representing desired information in the analyzed information in order to create information necessary for creating new partial TS. Further, the CPU saves the section selecting information which includes the extracted descriptor in another area of the register or the like and should temporarily save a string of SITs for transmitting the section selecting information in still another area.

Furthermore, an instruction in inserting the saved SIT into the partial TS is set in the received section of the TS, and accordingly while the internal timer of the receiving section is being operated, a position into which the TS packet including the SIT can be inserted is searched. It is necessary to execute a process for inserting the TS packet into that position, and at this time, the process for inserting the SIT so that the entire information as the SIT is transmitted according to the condition of the retransmission period of the SIT is required.

The document describing the above conventional technology includes the following patent documents.

Patent document 1: Japanese Patent Application Laid-Open No. 2002-344834(Japanese Unexamined Patent Publication). This document discloses the invention that TS-converted digital broadcasting is filtered so as to be divided into partial TS and program information, the program information is stored in SRAM, and the partial TS and corresponding program information are synthesized to be output.

Patent Document 2: Japanese Patent Application Laid-Open No. 2001-352522(Japanese Unexamined Patent Publication). This document discloses the invention that program information and picture image/voice or the like are separated from TS, program information is managed in SRAM, and information about picture image or the like is recorded in recording media (tape medium).

Patent Document 3: Japanese Patent Application Laid-Open No. 2001-352517 (Japanese Unexamined Patent Publication). This document discloses the invention that picture image information, voice information, program information and management information are extracted from MPEG2-TS, and they are recorded as files.

### DISCLOSURE OF THE INVENTION

### Problems to be Solved by the Invention

According to the conventional partial TS reconstructing method, however, a number of timer interruptions by the internal timer increases, and thus the apparatus constitution and software processes become complicated. As a result, the manufacturing cost of the recorder or the like increases, or the processing speed is prevented from being heightened.

The present invention, therefore, is devised in order to solve the above problem, and its object is to provide an information recording apparatus and an information recording program which can record TS to be input as partial TS at a high speed with a simple constitution, an information output apparatus and an information output program which can output the recorded partial TS as original TS at a high speed with a simple constitution when the partial TS is output to the outside, a recording medium where a dynamic picture image is recorded by the information recording apparatus or the like, and an information recording medium where the information recording programor the information output program is recorded.

### Means to Solve the Problem

In order to solve the above problem, the invention from a first aspect is an information recording apparatus which records a partial information stream such as partial TS created based on an information stream such as TS acquired from the outside in a recording medium, including: a first creating device which creates partial attribute information such as a partial transport stream descriptor and a network identification descriptor based on attribute information such as PSI/SI included in the information stream; a first recording device such as a recording section which creates the partial information stream repeatedly including the created partial attribute information so as to record it in the recording medium; a second creating device such as a microcomputer section which creates attachment attribute information for compensating the partial attribute information based on the attribute information; and a second recording device such as a recording section which records the created attachment attribute information in the recording medium separately from the partial information stream.

Accordingly, the partial attribute information is created based on the attribute information included in the information stream, the partial information stream repeatedly including the created partial attribute information is created so as to be recorded in the recording medium, and the attachment attribute information for compensating the partial attribute information is created based on the attribute information so that the created attachment attribute information is recorded in the recording medium separately from the partial information stream. For this reason, necessary information can be recorded as a stream in the recording medium by a process for extracting only the partial attribute information from the original information stream, so that the information stream can be recorded in the recording medium at a high speed with a simple constitution.

Further, since the partial attribute information is formed based on the attribute information or the like included in the original information stream, necessary information can be recorded in the recording medium more simply.

In order to solve the above problem, the invention from a second aspect is the information recording apparatus from the first aspect, wherein the partial attribute information is standardized so as to be included in the partial information stream and be output essentially.

Since the partial attribute information is, therefore, standardized so as to be included in the partial information stream and be essentially output, the necessary process for the partial information streamafter the output is executed securely.

In order to solve the above problem, the invention from a third aspect is the information recording apparatus from the first or second aspect, wherein the first recording device replaces a part of the partial information stream with the partial attribute information so as to create the partial information stream.

Since a part of the partial information stream is, therefore, replaced with the partial attribute information so as to be recorded in the recording medium, the necessary information can be recorded in the recording medium at a high speed.

In order to solve the above problem, the invention from a fourth aspect is the information recording apparatus from any one of the first to the third aspects, wherein the information stream is acquired by receiving digital broadcasting according to ARIB standards.

The information stream according to the standards can be, therefore, recorded in the recording medium at a high speed with a simple structure.

In order to solve the above problem, the invention from a fifth aspect is a recording medium including: a first recording area where the partial information stream repeatedly including partial attribute information such as a partial transport stream descriptor and a network identification descriptor representing at least attribute information of the partial information stream is recorded; and a second recording area where attachment attribute information for compensating the partial attribute information is recorded.

The partial information stream repeatedly including the partial attribute information created based on the attribute information included in the information stream is recorded in the first recording area, and the attachment attribute information created based on the attribute information is recorded in the second recording area different from the first recording area. For this reason, information necessary for the recording medium is accepted to be recorded as a stream only by the process for extracting only the partial attribute information from the original information stream, so that the information stream can be recorded in the recording medium at a high speed with a simple structure.

Further, since the partial attribute information is formed based on the attribute information or the like included in the original information stream, necessary information can be recorded in the recording medium more simply.

In order to solve the above problem, the invention from a sixth aspect is a recording medium reproducing apparatus which reproduces the recording medium according from the fifth aspect, including: a first detecting device such as a reproduction control section which detects the partial information stream recorded in the first recording area; an extracting device such as a demultiplexer which extracts the partial attribute information from the detected partial information stream; a second detecting device such as a reproduction control section which detects the attachment attribute information recorded in the second recording area; a first creating device such as a microcomputer section which compensates the extracted partial attribute information based on the attachment attribute information so as to create stream attribute information; a second creating device such as a microcomputer section which creates partial information stream repeatedly including the created stream attribute information; and an output device such as a microcomputer section which outputs the created partial information stream.

The partial information stream recorded in the first recording area is detected, and the partial attribute information is extracted from the detected partial information stream. Further, the attachment attribute information recorded in the second recording area is detected, and the extracted partial attribute information is compensated based on the attachment attribute information so that the stream attribute information is created. Further, the partial information stream repeatedly including the created stream attribute information is created so as to be output. For this reason, the partial information stream as well as the necessary information can be output to the outside.

In order to solve the above problem, the invention from a seventh aspect is the recording medium reproducing apparatus from the sixth aspect, wherein the second creating device replaces the partial attribute information included in the partial information stream with the created stream attribute information so as to create the partial stream information.

Since the partial attribute information included in the partial information stream is replaced with the stream attribute information so that the partial stream information is created, the partial stream information can be created at a high speed.

In order to solve the above problem, the invention from an eighth aspect is an information recording method of recording partial information stream such as partial TS created based on an information stream such as TS acquired from the outside in a recording medium, including: the first creating process for creating partial attribute information (partial transport stream descriptor and network identification descriptor) based on attribute information such as PSI/SI included in the information stream; the first recording process for creating the partial information stream repeatedly including the created partial attribute information so as to recorded it in the recording medium; the second creating process for creating attachment attribute information for compensating the partial attribute information based on the attribute information; and the second recording process for recording the created attachment attribute information in the recording medium separately from the partial information stream.

The partial attribute information is created based on the attribute information included in the information stream, and the partial information stream repeatedly including the created partial attribute information is created so as to be recorded in the recording medium. The attachment attribute information for compensating the partial attribute information is created based on the attribute information and are recorded in the recording medium separately from the partial information stream. For this reason, necessary information for the recording medium can be recorded as a stream only by the process for extracting only the partial attribute information from the original information stream, so that the information stream can be recorded in the recording medium at a high speed with a simple constitution.

Further, since the partial attribute information is formed based on the attribute information or the like included in the original information stream, the necessary information can be recorded in the recording medium more simply.

In order to solve the above problem, the invention from a ninth aspect is recording medium reproducing method of reproducing the recording medium from the fifth aspect, including: the first detecting process for detecting the partial information stream recorded in the first recording area; the extracting process for extracting the partial attribute information from the detected partial information stream; the second detecting process for detecting the attachment attribute information recorded in the second recording area; the first creating process for compensating the extracted partial attribute information based on the attachment attribute information so as to create stream attribute information; the second creating process for creating a partial information stream repeatedly including the created stream attribute information; and the output process for outputting the created partial information stream.

The partial information stream recorded in the first recording area is detected, the partial attribute information is extracted from the detected partial information stream, and the attachment attribute information recorded in the second recording area is detected. The extracted partial attribute information is compensated based on the attachment attribute information so that the stream attribute information is created, and the partial information stream repeatedly including the created stream attribute information is created so as to be output. For this reason, the partial information stream as well as necessary information can be output to the outside.

In order to solve the above problem, in the invention from a tenth aspect, an information recording computer included in an information recording apparatus for recording a partial information stream such as partial TS created based on an information stream such as TS acquired from the outside in a recording medium is allowed to function as: a first creating device which creates partial attribute information such as a partial transport stream descriptor and a network identification descriptor based on attribute information such as PSI/SI included in the information stream; a first recording device which creates the partial information stream repeatedly including the created partial attribute information so as to record it in the recording medium; a second creating device which creates attachment attribute information for compensating the partial attribute information based on the attribute information; and a second recording device which records the created attachment attribute information in the recording medium separately from the partial information stream.

The partial attribute information is created based on the attribute information included in the information stream, and the partial information stream repeatedly including the created partial attribute information is created so as to be recorded in the recording medium. The attachment attribute information for compensating the partial attribute information is created based on the attribute information, and the created attachment attribute information is recorded in the recording medium separately from the partial information stream. Since the information recording computer functions in such a manner, information necessary for the recording medium can be recorded as a stream in the recording medium only by the process for extracting only the partial attribute information from the original information stream, so that the information stream can be recorded in the recording medium at a high speed with a simple constitution.

Further, since the information recording computer functions so that partial attribute information is formed based on the attribute information or the like included in the original information stream, the necessary information can be recorded in the recording medium more simply.

In order to solve the above problem, in the invention from an eleventh aspect, a recording medium reproducing computer included in the recording medium reproducing apparatus from the sixth aspect for reproducing the recording medium from the fifth aspect is allowed to function as: a first detecting device which detects the partial information stream recorded in the first recording area; an extracting device which extracts the partial attribute information from the detected partial information stream; a second detecting device which detects the attachment attribute information recorded in the second recording area; a first creating device which compensates the extracted partial attribute information based on the attachment attribute information so as to create stream attribute information; a second creating device which creates a partial information stream repeatedly including the created stream attribute information; and an output device which outputs the created partial information stream.

The partial information stream recorded in the first recording area is detected, the partial attribute information is extracted from the detected partial information stream, and the attachment attribute information recorded in the second recording area is detected. The extracted partial attribute information is compensated based on the attachment attribute information so that the stream attribute information is created, and the partial information stream repeatedly including the created stream attribute information so as to be output. Since the recording medium reproducing computer function in such a manner, the partial information stream as well as necessary information can be output to the outside.

In order to solve the above problem, in the invention from a twelfth aspect, the information recording program from the tenth aspect is recorded so as to be readable by the information recording computer.

The information recording program is read to be executed by the information recording computer, so that the partial attribute information is created based on the attribute information included in the information stream, and the partial information stream repeatedly including the created partial attribute information is created so as to be recorded in the recording medium. the attachment attribute information for compensating the partial attribute information is created based on the attribute information, and the created attachment attribute information is recorded in the recording medium separately from the partial information stream. Since the information recording computer functions in such a manner, information necessary for the recording medium is can be recorded as a stream only by the process for extracting only the partial attribute information from the original information stream, so that the information stream can be recorded in the recording medium at a high speed with a simple constitution.

Further, since the information recording computer functions so that the partial attribute information is formed based on the attribute information or the like included in the original information stream, the necessary information can be recorded in the recording medium more simply.

In order to solve the above problem, in the invention from a sixteenth aspect, the recording medium reproducing program from the eleventh aspect is recorded so as to be readable by the recording medium reproducing computer.

The recording medium reproducing program is read to be executed by the recording medium reproducing computer, so that the partial information stream recorded in the first recording area is detected, and the partial attribute information is extracted from the detected partial information stream. The attachment attribute information recorded in the second recording area is detected, and the extracted partial attribute information is compensated based on the attachment attribute information, so that the stream attribute information is created. Further, the partial information stream repeatedly including the created stream attribute information is created so as to be output. Since the recording medium reproducing computer functions in such a manner, the partial information stream as well as necessary information can be output to the outside.

### BEST MODES FOR CARRYING OUT THE INVENTION

A preferable embodiment of the present invention is explained below with reference to the drawings.

In the embodiment explained below, the present invention is applied to a receiver which receives airwaves of BS (Broadcast Satellite) digital broadcasting, selects a desired program from the airwaves and temporarily records it, and outputs the program to the outside via a network such as a serial bus.

### (I) Explanation of ARIB Standards and the Like

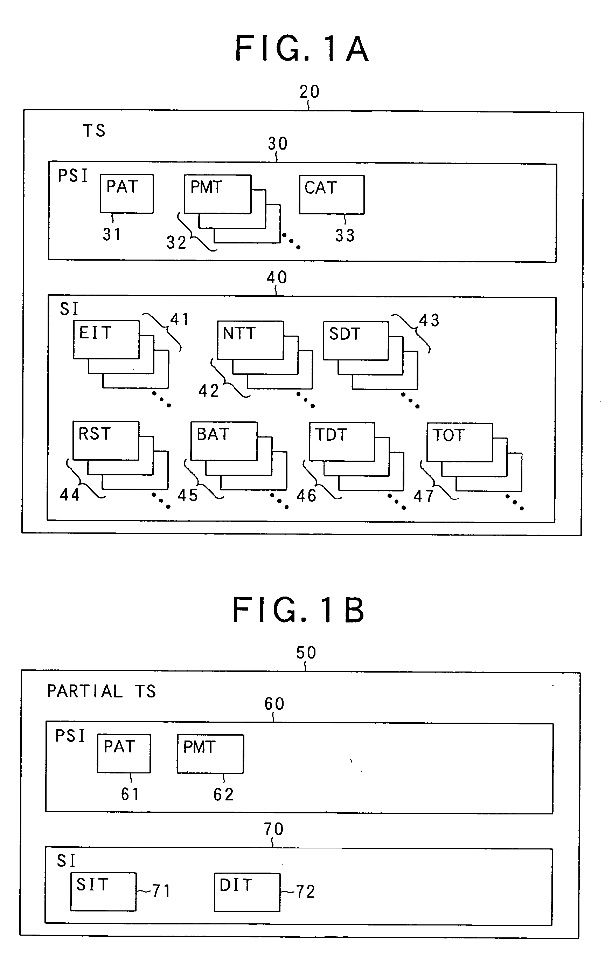

Firstly, before the concrete embodiment is explained, the summary of the ARIB standards or the like adopted by the present invention is explained with reference to Figs. 1 to 6. Figs. 1 to 6 are diagrams illustrating data structures and the like which are publicly opened as the ARIB standards or the like.

In the current BS digital broadcasting, one TS 20 which is broadcasted occasionally includes a plurality of programs defined by MPEG standards. As shown in Fig. 1A, PSI 30 for identifying the programs is described in PAT 31 and PMT 32 or CAT (Conditional Access Table) 33 to be transmitted. On the other hand, SI 40 including various services in TS other than TS 20 which is current received is described in various tables such as EIT 41, NIT 42, SDT 43, RST (Running Status Table) 44, BAT (Bouquet Association Table) 45, TDT (Time Data Table) 46 or TOT (Time Offset Table) 47 to be transmitted.

In the tables shown in Fig. 1A, one table corresponds to only one program, and thus when TS 20 includes a plurality of programs, tables whose number is equal with the number of the programs are present.

As shown in Fig. 1B, in partial TS 50, PMT 62 and PAT 61 which are transmitted to PSI 60 including attribute information or the like corresponding to only one program selected as the partial TS are transmitted, and only SIT 71 and DIT 72 to be transmitted to SI 70 as corresponding contents are defined. The partial TS 50 is formed without including dynamic picture image information as an entity part of the program and packet other than SIT 71 and DIT 72.

Figs. 1A and 1B illustrate only the tables as the attribute information, and actual TS 20 and partial TS 50 includes dynamic picture image information or the like as the entity information to be recorded in tables other than TS 20 and partial TS 50.

A structure of SIT 71 of the present invention is further explained below.

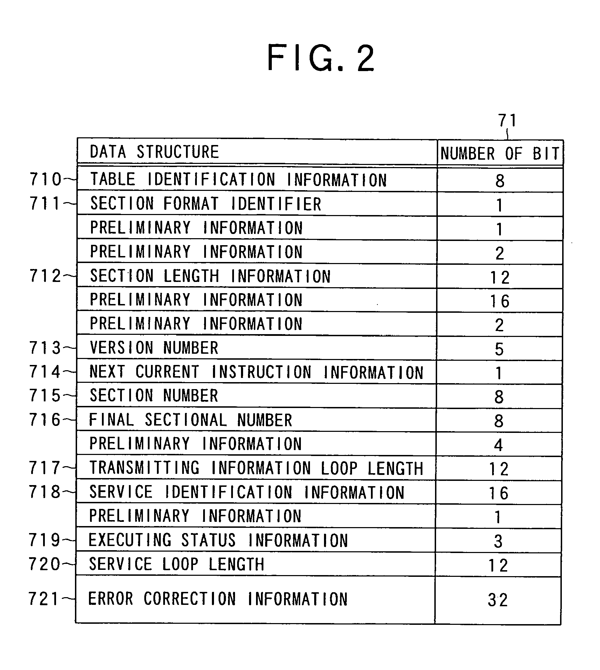

Services to be transmitted as partial TS 50 and contents of events are described in SIT 71, and SIT 71 is divided into so-called selecting information sections like a data structure shown in Fig. 2. At this time, all the selecting information sections composing SIT 71 are transmitted by transport packet with PID (packet ID) value "0x001F", and the table identifying value is "0x7F".

The main data structure shown in Fig. 2 is explained. Table identification information 710 is for identifying SIT 71 from the other tables, and a section format identifier 711 always has a value "1". Section length information 712 of 12 bits defines a byte number of the selecting information sections just after this field to the final field SIT 71. Since the entire selecting information section length does not exceed 4096 bytes which is the maximum value, it is defined that the section length should not exceed 4093 bytes.

A version number 713 of 5 bits is a version number of SIT 71. When information in SIT 71 changes, "1" is added to the version number 713. When the value becomes "31" , it is prescribed that the value returns to "0". When a value of current next instruction information 714 explained below is "1", the version number 713 becomes the version number of SIT 71, and when the value of the current next instruction information 714 is "0", the version number 713 shows the version number of SIT 71.

Further, the value of the current next instruction information 714 of 1 bit is "1", SIT 71 represents current SIT, and the value is "0", SIT 71 to be transmitted does not adapt to it, and it is used as next SIT.

A section number 715 of 8 bits represents a number of selecting information section, and concretely the section number 715 becomes "0×00" .

Further, a final section number 716 of 8 bits represents the final selecting information section number, and a concrete value is "0x00".

A transmission information table length 717 of 12 bits is information representing a number of total bytes of descriptors for describing transmission parameters of the partial TS. Service identification information 718 of 16 bits is label information for identifying a service to which SIT 71 is adopted from the other services in TS, and it has the value which is equal with that of broadcasting program number identification information in a program map section.

Execution status information 719 of 3 bits is information representing a progress status of an event in original TS, and represents a progress status of a current event in original TS. At this time, when the current event is not present in original TS, the current event is considered not to be executed in the execution status information 719, and a meaning of the value of the execution status is prescribed in STD-B10 in the ARIB standards.

Further, a service loop length 720 of 12 bits prescribes a total byte length of a descriptor loop including SI relating information of services and events in partial TS after SIT 71.

Finally, error correcting information 721 of 32 bits includes an error correcting value for making a register output in the decoder zero after all the selecting information sections are processed in the decoder prescribed by appendix B of STD-B10 in the ARIB standards.

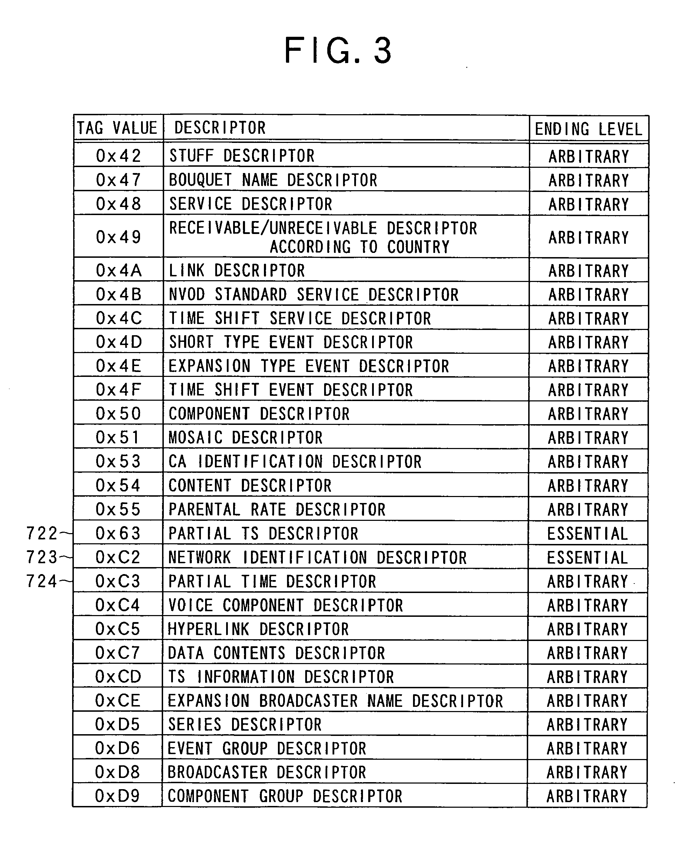

The descriptors to be included in SIT 71 are prescribed as shown in Fig. 3. Descriptors which should be essentially inserted at the time of outputting partial TS are partial TS descriptor 722 and network identification descriptor 723 in the descriptors in Fig. 3.

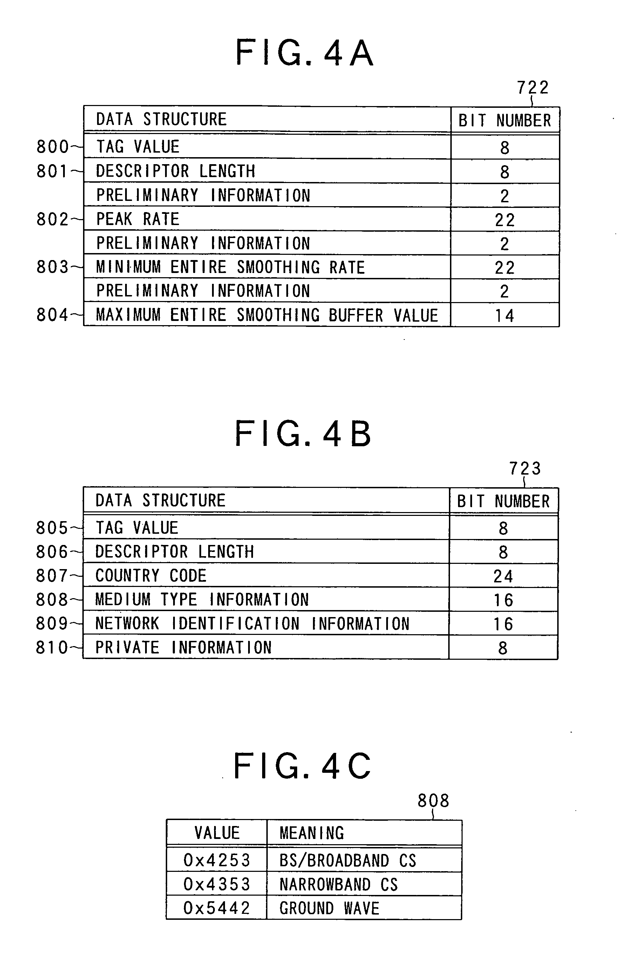

The partial TS descriptor 722 and the network identification descriptor 723 are explained below with reference to Figs. 4A to 4C.

The partial TS descriptor 722 is used as information necessary for recording the partial TS, and as shown in Fig. 4A, it is composed of a tag value 800, a descriptor length 801, a peak rate 802, a minimum entire smoothing rate 803, a maximum entire smoothing buffer value 804 and the like.

The peak rate 802 of 22 bits is information representing a maximum instantaneous transport packet rate (namely, 188 bytes is divided by time intervals of start time of continuous two TS stream packets) . It is necessary to at least prescribe the upper limit of the peak rate, and it is coded by positive integer with unit of 400 bits/sec.

The minimum entire smoothing rate 803 of 22 bits represents a leak rate of the minimum total smoothing buffer in all TSs (includes all packets), and it is coded by positive integer with unit of 400 bits/sec. A value "0x3FFFFF" of the minimum entire smoothing rate 803 is used for showing that the minimum smoothing rate is not prescribed.

Further, the maximum entire smoothing buffer value 804 of 14 bits shows a maximum total smoothing buffer size of all TSs (includes all packets), and it is coded by positive integer with unit of 1 byte. A value "0x3FFF" of the maximum entire smoothing buffer value 804 is used for showing that the maximum smoothing buffer size is not prescribed.

The network identification descriptor 723 is used for clarifying a source network which transmits partial TS, and as shown in Fig. 4B, it is composed of a tag value 805, a descriptor length 806, a country code 807, medium type information 808, network identification information 809 and private information 810.

The country code 807 of 24 bits represents a country name using three-alphabetical code prescribed by ISO3166 standards, and when this descriptor is used, it represents a country in a created distribution system of partial TS. For example, the three-alphabetical code of Japan is "JPN" and is coded into "0100 1010 0101 0000 0100 1110".

Two alphabets are inserted into the medium type information 808 of 16 bits, and the two alphabets represent a type of a recording medium relating to the partial TS. When this descriptor is used, it represents a type of the medium of a distribution system where the partial TS is created. Further, the respective characters are coded by 8 bits according to ISO8859-1 standards so as to be inserted into a field of 16 bits in order of coding. The types of the media are prescribed as shown in Fig. 4C.

A value of network identification in the distribution system where partial TS is created is described in the network identification information 809 of 16 bits. In an original distribution system, this value is described in NIT 42, and an allocation of the field values is specified by Minister of Public Management, Home Affairs, Posts and Telecommunications.

Values which are defined arbitrarily and individually are described in the private information 810 of 8×N bits.

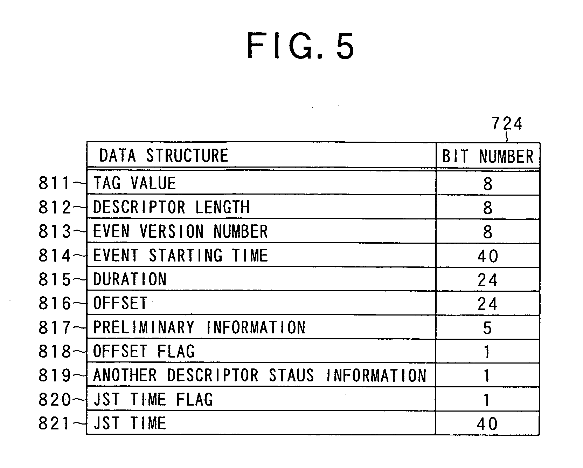

A data structure of descriptors which is arbitrarily inserted at the time of outputting partial TS in the descriptors shown in Fig. 3 is explained below with reference to Fig. 5 by exemplifying the structure of a partial transport stream time descriptor 724 shown in Fig. 3.

Time information at the time of transmitting time information relating to an event included in TS and the TS as partial TS is described in the partial transport stream time descriptor 724. When the partial transport stream time descriptor is described in transmission information loop length 717 in SIT 71, only JST (Japan Standard Time) 821, mentioned later, is described but information about the other events is not described. When the information about the events is described, the descriptor is inserted into the service loop length 721. It is not preferable that a plurality of partial transport stream time descriptors are inserted into one SIT 71.

As shown in Fig. 5, the partial transport stream time descriptor 724 is composed of a tag value 811, a descriptor length 812, an event version number 813, an event starting time 814, duration 815, offset 816, preliminary information 817, an offset flag 818, another descriptor status information 819, a JST time flag 820 and JST time 821.

The event version number 813 is enabled when the partial transport stream time descriptor 724 is inserted into the service loop length 720 of SIT 71, and in the case where SI information relating to an event indicated by the service loop length 720 is changed, the value is counted up only by "1". Updating of the event version number 813 by only a change in JST time is prohibited. In the case where the stream is changed by insertion in DIT 72 and events which are transmitted before and after DIT 72 have continuousness, it is desirable that the continuousness of the event version number 813 is ensured and the events are transmitted.

Starting time of the event in TS is described in the event starting time 814, and the starting time is the same as starting time described in EIT 41. When this time information is not used, "1" is described.

The duration of a target event is described in the duration 815. The duration is the same as duration described in EIT 41, and when this time information is not used, "1" is described.

So-called offset time is described in the offset 816, the event starting time 814 or the JST time 821 is present, a value corresponding to time described in them is described. When the value of the event starting time 814 or the JST time 821 is "0X000000", nothing is described in the offset 816.

In general, when the partial TS is created to be transmitted to the outside, it is desirable that useful information is inserted into SIT 71 in the partial TS as many as possible. That is to say, when the partial TS is transmitted via a communication path such as a serial bus, it is desirable that much information is provided to its receiving side. For this reason, it is desired that SIT 71 includes not essential but arbitrary descriptors as many as possible.

### (II) Entire Constitution and Operation of the Receiver According to the Embodiment

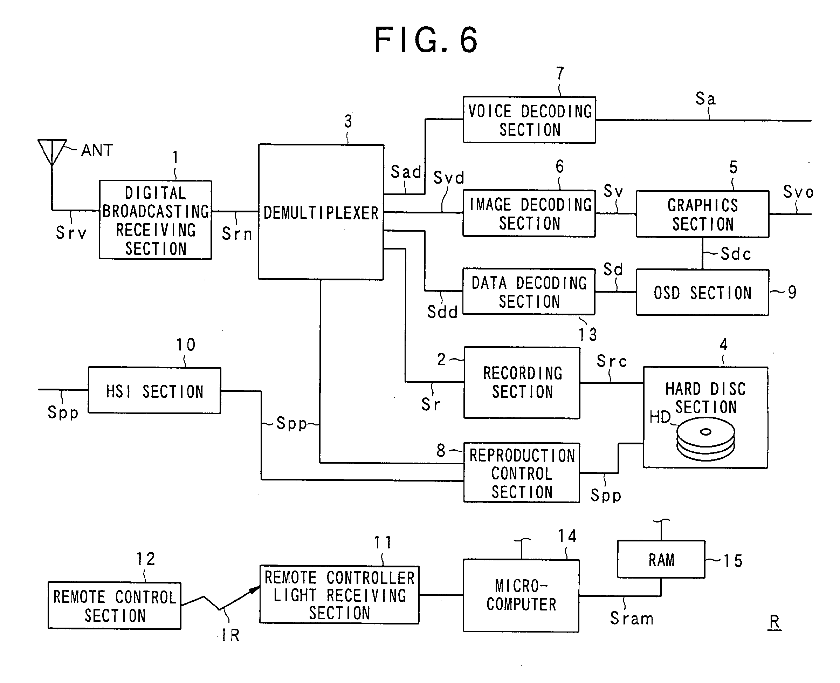

A constitution and an operation of the receiver according to the embodiment for receiving airwaves of BS digital broadcasting, selecting a desired program from them to temporarily record it, and outputting it to the outside via a network on the premise of the ARIB standards having the above contents are explained below with reference to Figs. 6 to 18. (A) Entire constitution and constitution of recording format or the like

The constitution of the receiver according to the embodiment is explained with reference to Fig. 6. Fig. 6 is a block diagram illustrating a schematic constitution of the receiver according to the embodiment.

As shown in Fig. 6, the receiver R in the embodiment includes a digital broadcasting receiving section 1 which is connected to an antenna ANT, a recording section 2 as a first recording device and a second recording device, a demultiplexer 3, a hard disc section 4 which contains a hard disc HD, a graphics section 5, a picture image decoding section 6, a voice decoding section 7, a reproduction control section 8 as a first detecting device, an extracting device and a second detecting device, an OSD (On Screen Display) section 9, an HSI (High Speed Interface) section 10, a portable remote controller 12, a remote controller receiving section 11 which receives information transmitted from the remote controller 12 via infrared ray or the like, a data decoding section 13, a RAM (Random Access Memory) 15, and a microcomputer section 14 as a creating device and an output device.

Firstly, the antenna ANT receives an airwave of digital broadcasting, creates a receiving signal Srv corresponding to the received airwave, and outputs it to the digital broadcasting receiving section 1.

The digital broadcasting receiving section 1 selects digital information corresponding to a desired channel from received digital information, and outputs it as digital information Srn to the demultiplexer 3.

As a result, the demultiplexer 3 gives a necessary demultiplex process to TS 20 included in the digital information Srn. At this time, the demultiplexer 3 outputs a packet including picture image information to be decoded as picture image information Svd to the picture image decoding section 6, and outputs a packet including voice information to be decoded as voice information Sad to the voice decoding section 7. The demultiplexer 3 outputs a packet including data information (character information or the like) to be decoded as data information Sdd to the data decoding section 13, and outputs a packet including information to be recorded in the hard disc HD as recording information Sr to the recording section 2. Further, PID for identifying packet to be transmitted to the picture image decoding section 6, the voice decoding section 7, the data decoding section 13 or the recording section 2 can be set in the demultiplexer 3.

When PIDs of the packets including respective tables for transmitting PSI 30 and SI 40 are set, the demultiplexer 3 can detect a table for transmitting PSI 30 or SI 40, and can store the detected table in the RAM 15 according to the type of the tables simultaneously.

Further, the demultiplexer notifies the detection of PSI 30 or SI 40 to the microcomputer section 14, and can notify its type and a stored position in the RAM 15.

The data in PSI 30 or SI 40 can be replaced with another data, and its function includes a function for setting a position in the RAM 15 where a table including the data to be replaced with PID of a packet to be replaced is stored.

On the other hand, the voice decoding section 7 decodes the voice information Sad output from the demultiplexer 3, and outputs decoded voice information Sa as the decoded result to the outside.

The picture image decoding section 6 decodes the picture image information Svd output from the demultiplexer 3, and outputs decoded picture image information Sv as the decoded results to the graphics section 5.

Further, data decoding section 13 decodes the data information Sdd output from the demultiplexer 3, and creates decoded data information Sd as the decoded result so as to output it to the OSD section 9.

As a result, the OSD section 9 outputs character information Sdc or the like included in the decoded data information Sd to the graphics section 5, and outputs graphics or the like instructed by the microcomputer section 14 as the need arises to the graphics section 5.

The graphics section 5 synthesizes the decoded picture image information Sv with the character information Sdc or the like so as to output the synthesized information as picture image output information Svo to an external display or the like, not shown.

On the other hand, the recording section 2 has a buffer memory, not shown, which records the recording information Sr from the demultiplexer 3 in the hard disc HD in the hard disc section 4. The hard disc section 4 is controlled so that recording information Sr for recording information necessary for the hard disc HD and a recording signal Src including recording control information are created, and they are output to the hard disc section 4.

The hard disc section 4 records the recording information Sr included in the recording signal Src from the recording section 2 in the hard disc HD based on recording control information included in the recording signal Src, and retrieves the recording information Sr from the hard disc HD as the need arises so as to output it as reproduction information Spp to the reproduction control section 8.

As a result, the reproduction control section 8 acquires the reproduction information Spp detected from the hard disc HD in the hard disc section 4 so as to output it to one of the demultiplexer 3 and HSI0. For this reason, the reproduction control section 8 has the buffer memory, not shown, and after it temporarily stores the reproduction information SPP in the buffer memory, it outputs the reproduction information Spp to one of the demultiplexer 3 and HSI section 10 at necessary timing.

The HSI section 10 outputs the acquired reproduction information Spp to an external network.

In this operation, the microcomputer section 14 transmits/receives information to be temporarily stored as RAM information Sram in the RAM 15 to/from the RAM 15, and simultaneously controls the respective components so as to control the receiving process, the recording process in the hard disc HD and the output process via the HSI section 10 to the outside according to the present invention in a supervisory manner.

For this reason, the RAM 15 provides a temporary storage area for the process in the microcomputer section 14, and provides a temporary storage area for various processes in the demultiplexer 3.

On the other hand, the remote control light receiving section 11 creates an operation signal Sop corresponding to an operation in the remote controller 12 to output it to the microcomputer section 14. As a result, the microcomputer section 14 controls the operations of the respective components according to the operation contents included in the operation signal Sop.

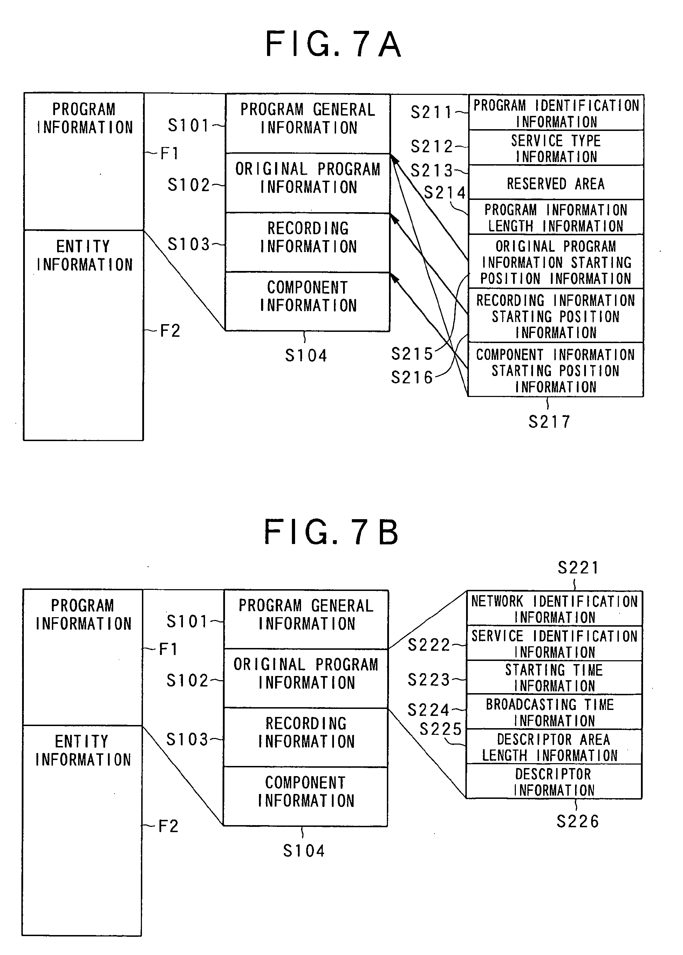

A recording format (logical recording format) in the hard disc HD when information necessary for outputting a part of TS 20 received as the partial TS from the receiver R is recorded in the hard disc HD is explained below with reference to Figs. 7 to 11.

Figs. 7 to 11 are pattern diagrams illustrating hierarchy of the recording format.

Attribute information or the like to be added in order to output recording information Sr such as a dynamic image or the like to be output to the outside as partial TS to the outside as well as the recording information Sr is recorded in the hard disc HD.

As shown in Fig. 7A, the information to be recorded on the hard disc HD is roughly divided into program information F1 and entity information F2 to be output as partial TS to the outside so as to be recorded.

At this time, the program information F1 contains information relating to the entity information F2.

The program information F1 is composed of program general information S101, original program information S102, recording information S103 and component information S104.

At this time, information to be recorded in the hard disc HD (hereinafter, program) and general information relating to entire things are recorded as the program general information S101.

Information which relates to television program included in the program and is transmitted from a broadcasting station is recorded as the original program information 102.

Further, information relating to the recording operation in the hard disc HD is recorded as the recording information S103.

Information relating to components composing a program of picture image information, voice information or the like is recorded as the component information 104.

A detailed structure of the program general information S101 is explained below

As shown in Fig. 7A, the program general information S101 is composed of program identification information S211, service type information S212, a reserved area S213, program information length information S214, original program information starting position information S215, recording'information starting position information S216, and component information starting position information S217.

At this time, the program identification information S211 is information of 1 byte for recording as to what is recorded as a program, and is, for example, information for identifying digital broadcasting according to the ARIB standards, partial TS via a serial bus, TS 20 encoded by itself and the like.

The service type information S212 is information of 1 byte for recording what type of a service is recorded in the program, and is, for example, information for identifying digital television, digital radio and the like.

Further, the reserved area 213 is a field of 2 bytes where information which has particularly no meaning is recorded.

The program information length information S214 is information of 4 bytes for representing a length (entire information amount) of the program information F1 with a number of bytes.

The original program information starting position information S215 is information of 4 bytes for representing that what byte of a position from the head of the program information F1 where the original program information S102 starts.

The recording information starting position information S216 is information of 4 bytes representing that what bytes of a position from the head of the program information F1 where the recording information S103 starts.

The component information starting position information S217 is information of 4 bytes representing that what bytes of a position from the head of the program information F1 where the component information S104 starts.

A detailed structure of the original program information S102 is explained below with reference to Fig. 7B.

As shown in Fig. 7B, the original program information S102 is composed of network identification information S221, service identification information S222, starting time information S223, broadcasting time information S224, descriptor area length information S225 and descriptor information S226.

At this time, the network identification information S221 is information of 2 bytes representing a network identification value for identifying a network which delivers a program to be recorded, and a value of TS identification information in PAT 31 included in original TS 20 is recorded therein.

The service identification information S222 is information of 2 bytes representing a service identification value for identifying a broadcasting station (channel) which broadcasts a program to be recorded, and a value of program identification information in PAT 31 is recorded therein.

The starting time information S223 is information of 5 bytes representing starting time of a program to be recorded, and a value of starting time information in the event information section to be transmitted by EIT 41 relating to a program to be recorded is recorded therein.

The broadcasting time information S224 is information of 3 bytes representing broadcasting time of a program to be recorded, and a duration information in the event information section to be transmitted by EIT 41 relating to a program to be recorded is recorded therein.

The descriptor area length information S225 is information of 4 bytes representing a total byte number of a descriptor to be recorded as the descriptor information 226 subsequent to the descriptor area length information S225.

Finally, the descriptor information S226 is a descriptor which is acquired from broadcasted TS 20 and is temporarily recorded, and its area length is not constant.

When the ARIB standards are exemplified, the following, for example, can be recorded as descriptors included in the descriptor information S226 in random order.
- service#list#descriptor •short#event#descriptor •extended#event#descriptor
- series#descriptor
- content#descriptor
- digital#copy#control#descriptor • parental#rating#descriptor

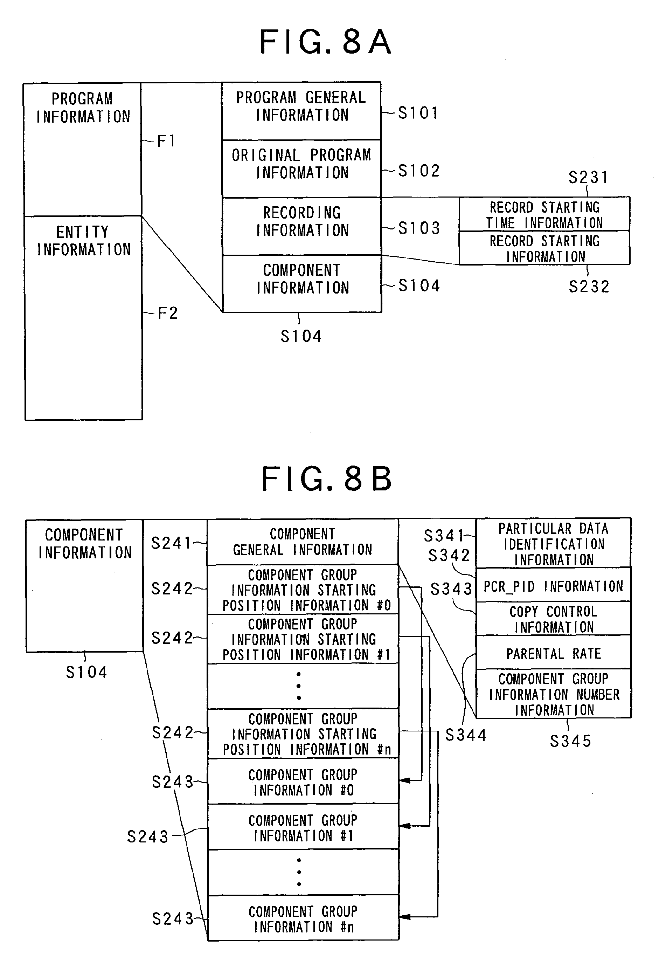

A concrete structure of the recording information S103 is explained below with reference to Fig. 8A.

As shown in Fig. 8A, the recording information S103 is composed of recording starting time information S231, and recording time information S232.

At this time, the recording starting time information S231 is information of 5 bytes representing time at which the partial TS 50 starts to be recorded, and the recording time information S232 is information of 3 bytes representing time of recorded partial TS 50.

A detailed structure of the component information S104 is explained below with reference to Fig. 8B.

As shown in Fig. 8B, the component information S104 is composed of component general information S241, one or plural piece(s) of component group information starting position information S242, and component group information 242 whose number of pieces is equal with that of the component group information starting position information S242.

At this time, general information relating to the component is described in the component general information S241.

The component group information starting position information S242 is information representing a number of bytes of from the starting position of the component information S104 to the component group information S2

Information relating to a component group is described in the component group information S243.

A detailed structure of the component general information S241 is explained below with reference to Fig. 8B.

As shown in Fig. 8B, the component general information S241 is composed of particular data identification information S341, PCR (Program Clock Reference)_PID information S342, copy control information 343, parental rate information S344, and component group information number information S345.

At this time, the particular data identification information S341 is information of 1 byte representing that multi-view service or data broadcasting are included.

The PCR_PID information S342 is information of 2 bytes representing PID of a packet for transmitting PCR in a program, and PCR_PID described in a first loop of PMT 32 to be recorded is recorded.

The copy control information S343 is information of 1 byte representing that copy control in a program is set when it is set, and when the copy control is set in the first loop of PMT 32 to be recorded, that value is recorded.

The parental rate information S344 is information of 1 bytes representing that a parental rate of a program is set when it is set, and when the parent rate is set in the first loop of PMT 32 to be recorded, its value is recorded.

In the component group information number information S345, a number of sets of the following component group information starting position information S242 and component group information S243 is recorded.

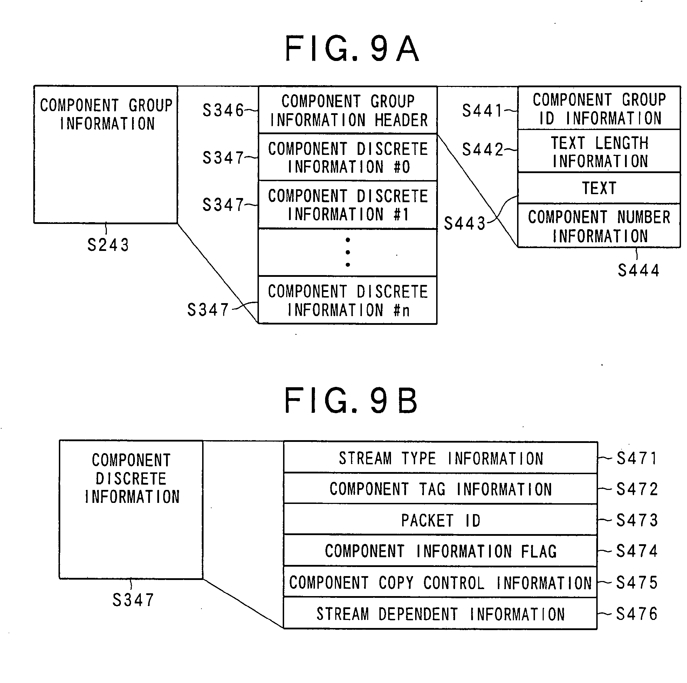

A detailed structure of the component group information S243 is explained below with reference to Fig. 9A.

As shown in Fig. 9A, the component group information S243 is composed of a component group information header S346, and one or plural piece (s) of the component individual information S347.

At this time, general information relating to the component group is recorded as the component group information header S346.

Individual information of the components is recorded as the component individual information S347.

A detailed structure of the component group information header S346 is explained below with reference to Fig. 9A.

As shown in Fig. 9A, the component group information header S346 is composed of component group identification information S441, text length information S442, a text S443, and component number information S444.

At this time, the component group identification information S441 is information of 1 byte representing a value identifying a component group. When a component group is defined in broadcasted TS 20, its value is given, and when a component group is not defined, an identification value is given so that the partial TS 50 becomes uniform in component information when the receiver R records the partial TS 50.

The text length information S442 is information of 4 bytes representing a data length of character string showing the component group, and when a component group is defined in broadcasted TS 20, a character string length of the character string showing the component group defined in a component group descriptor is described.

The text S443 is information of N bytes for describing the character string representing the component group, and when the component group is defined in broadcasted TS 20, a character representing the component group defined in the component group descriptor is described.

Further, the component number information S444 is information of 1 byte representing a number of the following components.

A detailed structure of the component group individual information S347 is explained below with respect to Fig. 9B.

As shown in Fig. 9B, the component individual information S347 is composed of stream type information S471, a component tag S472, a packet IDS473, a component information flag S474, component copy control information S475, and stream dependent data S476.

At this time, the stream type information S471 is information of 1 byte representing a type of data represented by the component individual information S347, and a value for identifying picture image information, voice information, data information or concomitant data information is recorded.

The component tag S472 is information of 1 byte where a tag value for identifying a type of an elementary stream is described, and tag values to be added to elementary streams described in a second loop of PMT 32 are described.

The packet IDS 473 is information of 2 bytes representing PID of a packet for transmitting corresponding elementary stream, and PID of a packet described in the second loop of PMT 32 is described.

The component information flag S474 is information of 1 byte where a flag representing that PID is changed according to a component tag value is described, and when PID is changed according to a component tag value during recording, "1" is described.

The component copy control information S475 is information of 1 byte representing copy control information corresponding to a component, and when digital copy control descriptor is present in the second loop of PMT 32, a corresponding value in the descriptor is described.

Finally, the stream dependent data S476 are information which is composed of 32 bytes and can be freely described dependently on the streams.

The entity information F2 shown in Fig. 7A is explained concretely below with reference to Figs. 10 and 11.

As the entity information F2 in the embodiment, substantive dynamic image information or the like is recorded with a minimal structure of the partial TS defined by ARIB standards. That is to say, only essential descriptors included in SI 40 shown in Fig. 3 (concretely, a partial TS descriptor 722 and a network identification descriptor 723) are recorded. Hereinafter, SIT of the present invention which includes only the partial TS descriptor 722 and the network identification descriptor 723 is represented by SIT 80.

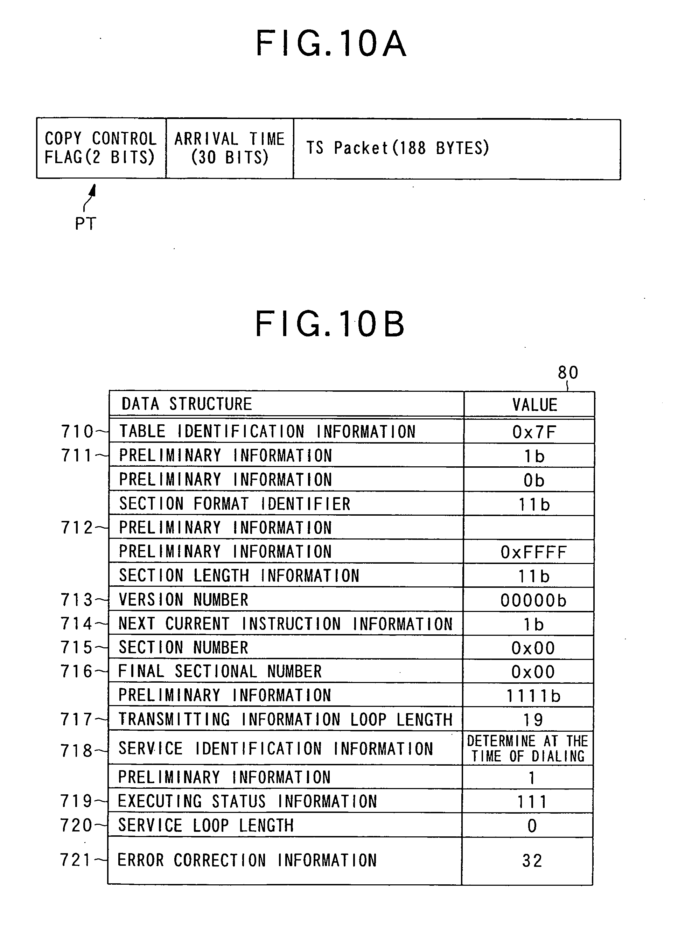

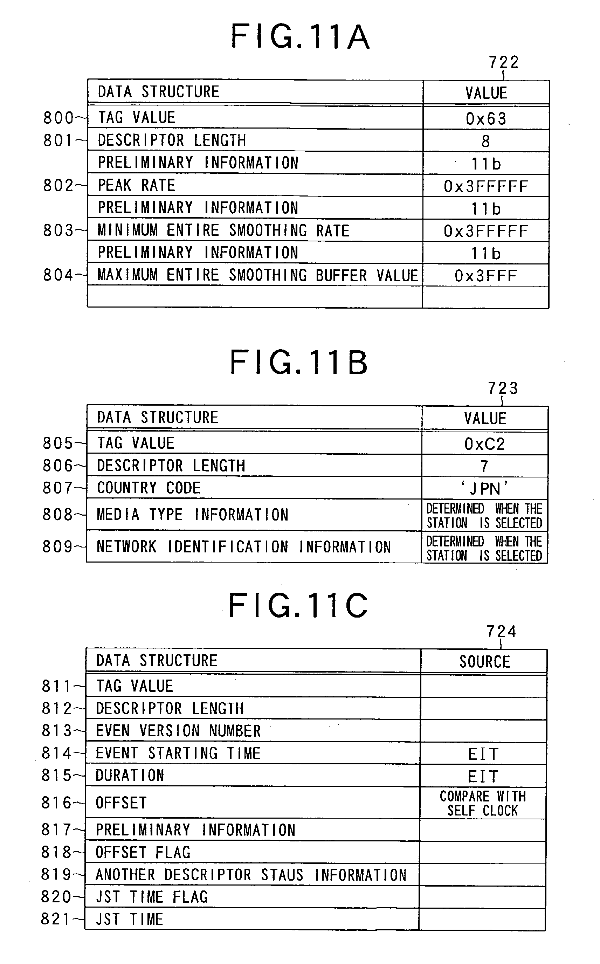

Concrete examples of SIT 80 to be recorded and the partial TS descriptor 722 and the network identification descriptor 723 corresponding to its contents are shown in Figs. 10B, 11A and 11B.

The structure of SIT 80 is determined at the time of starting of the recording, and even if a change point of an event is present, the SIT 80 can be prevented from being updated during the recording.

More concretely, as shown in Fig. 10A, TS packet PT composing the entity information F2 is composed of a copy control flag of 2 bits, arrival time of 30 bits acquired from the timer in the receiver R, and information of 192 bytes added to TS packet in original TS 20. As a string of the TS packet PT, partial TS on the hard disc HD is structured to be recorded.

Contents of SI 40 extracted from original TS 20 at the time of recording the program in the hard disc HD is recorded in the hard disc HD. That is to say, original SI 40 (for example, Fig. 11C illustrates a structure of partial TS time descriptor 724) contains logical information about a recorded event so that the original SI 40 is included in the service loop 720. The original SI 40 is useful when information to be presented to a user and partial TS are transmitted. Even if, therefore, they are not recorded in the entity information F2, they are recorded in an area related to the entity information F2.

### (B) Embodiment of the Recording Operation

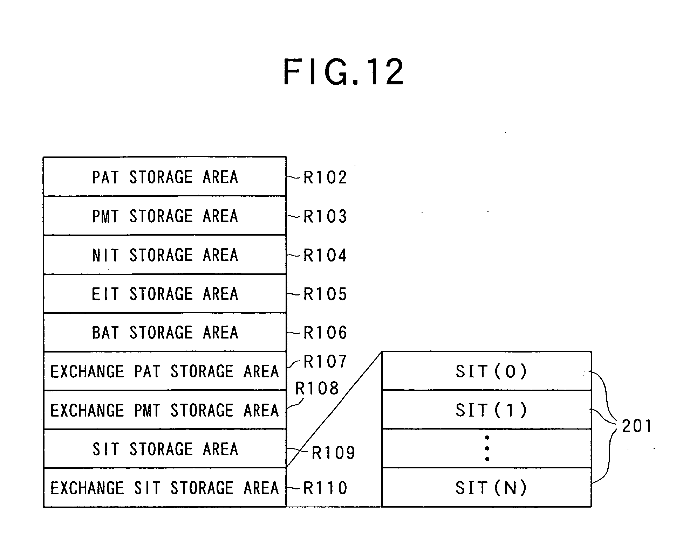

A concrete process for selecting a program included in the digital broadcasting received by the recorder R having the above constitution, temporarily recording it in the hard disc HD and reproducing it to output it to the outside is explained below with reference to Figs. 12 to 16 and 18.

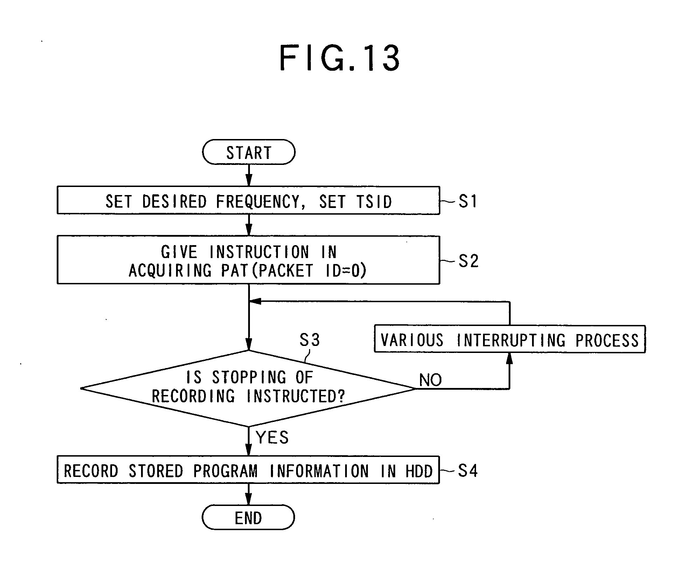

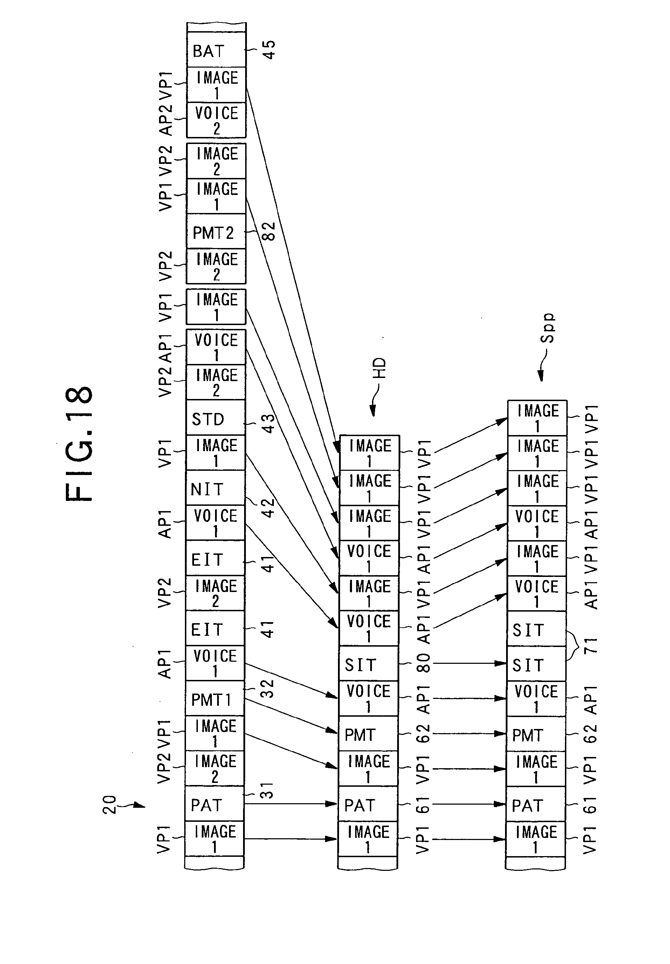

Fig. 12 is a diagram illustrating a data structure on the RAM 15 where information is temporarily recorded at the recording process, Figs. 13 to 16 are flow charts illustrating the recording process for information on the hard disc HD, and Fig. 18 is a diagram illustrating a structure example of streams at the respective stages.

Before the concrete recording operation is explained, the data structure in the recording area formed in the RAM 15 at the recording process is explained with reference to Fig. 12.

As shown in Fig. 12, during the recording operation in the embodiment, a PAT storage area R102 where PAT 31 included in TS 20 corresponding to the received program is temporarily stored, a PMT storage area R103 where PMT 32 included in TS 20 corresponding to the received program is temporarily stored, an NIT storage area R104 where NIT 42 included in TS 20 corresponding to the received program is temporarily stored, an EIT storage area R105 where EIT 41 included in TS 20 corresponding to the received program is temporarily stored, a BAT storage area R106 where BAT 45 included in TS 20 corresponding to the received program is temporarily stored, an exchange PAT storage area R107 where when the received program is recorded in the hard disc HD, exchange PAT, mentioned later, to be inserted instead of PAT 31 included in TS 20 corresponding to the received program is temporarily stored, an exchange PMT storage area R108 where when the received program is recorded in the hard disc HD, exchange PMT, mentioned later, to be inserted instead of PMT 32 included in TS 20 corresponding to the received program is temporarily stored, an SIT storage area R109 where SIT composed of various information included in TS 20 corresponding to the received program is temporarily stored , and an exchange SIT storage area R110 where when the received program is recorded in the hard disc HD, exchange SIT, mentioned later, to be inserted instead of SIT corresponding to the received program is temporarily stored are formed on the RAM 15 as the need arises.

At this time, when the program is recorded in the hard disc HD and then is reproduced to be output to the outside, a plurality of exchange SITs 201 to be inserted instead of SIT 80 at the time of recording are stored in the exchange SIT storage area R110 so as to be capable of being identified.

The concrete recording process on the hard disc HD is explained below. The following explanation gives an operation in the case where when a user selects a desired channel in the digital broadcasting using the remote controller 12 so as to reproduce the corresponding program (event), an instruction for recording the program in the hard disc HD is given by the remote controller 12.

As shown in Fig. 13, in the recording process, the digital broadcasting receiving section 1 is set for a desired frequency reception in order that the microcomputer section 14 selects a desired channel, and TS 20 corresponding to the desired program is output to the demultiplexer 3 (step S1).

When the microcomputer section 14 acquires PAT 31 for the demultiplexer 3 in order to set a desired program in the multiplexer 3, it sets a recording area of the acquired PAT 31 in the PAT storage area R102, and gives an instruction for generating interruption to the microcomputer section 14 in order to notify the acquiring of PAT 31 thereto. As a result, the demultiplexer 3 acquires PAT 31 so as to record PAT 31 in a predetermined position, and can notify the interruption to the microcomputer section 14 . As a result, the interruption process for acquiring PAT 31 from the microcomputer section 14 can be executed.

Whether an operation for canceling the recording process by means of the remote controller 12 is always monitored (step S3), and when this operation is executed (YES at step S3), the respective information stored in the RAM 15 is transmitted to the hard disc HD at this time (step S4), and a series of the recording process is completed.

On the other hand, when the recording process is not canceled (NO at step S3), the recording process is repeated until the interruption for notifying the acquiring of PAT 31 is received.

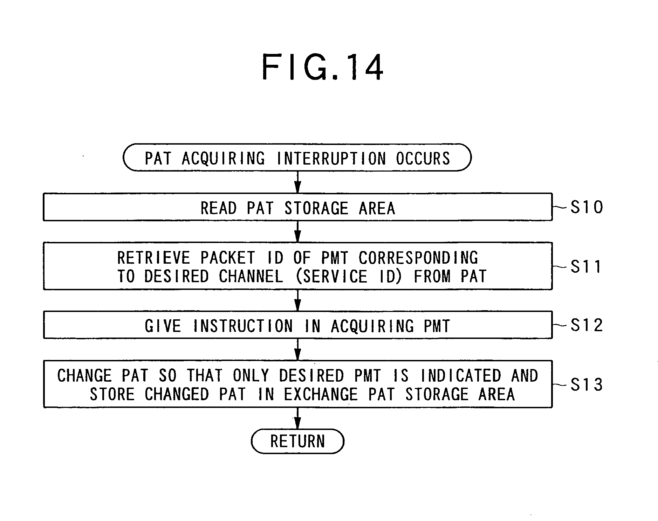

The process for acquiring PAT 31 which is started by the notification of the interruption (namely, the interruption process) is explained concretely below with reference to Fig. 14.

As shown in Fig. 14, in the interruption process for acquiring PAT 31, when the instruction for the interruption process is transmitted from the demultiplexer 3 to the microcomputer section 14, the contents of the PAT storage area R102 where the acquired PAT 31 is stored are read (step S10), and PID of PMT 32 corresponding to a desired channel (identified by service identification information) is retrieved from read PAT 31 (step S11) . When PMT 32 in the packet having the retrieved PID is acquired for the demultiplexer 3, an area where the acquired PMT 32 is written is set in the PMT storage area R103, and an instruction for generating the interruption in order to notify the acquiring of PMT 32 to the microcomputer section 14 is issued from the microcomputer section 14 (step S12) . As a result, the demultiplexer 3 acquires PMT 32, records PMT 32 in a predetermined position and notifies the interruption to the microcomputer section 14, so that the interruption process for acquiring PMT 32 from the microcomputer section 14 can be executed.

Thereafter, contents of PAT 31 are changed so that only the contents of the acquired PMT 32 are instructed, the changed contents are stored as PAT 61 to be exchanged in the exchange PAT storage area R107 in the RAM 15 (step S13), and the one time interruption process is completed.

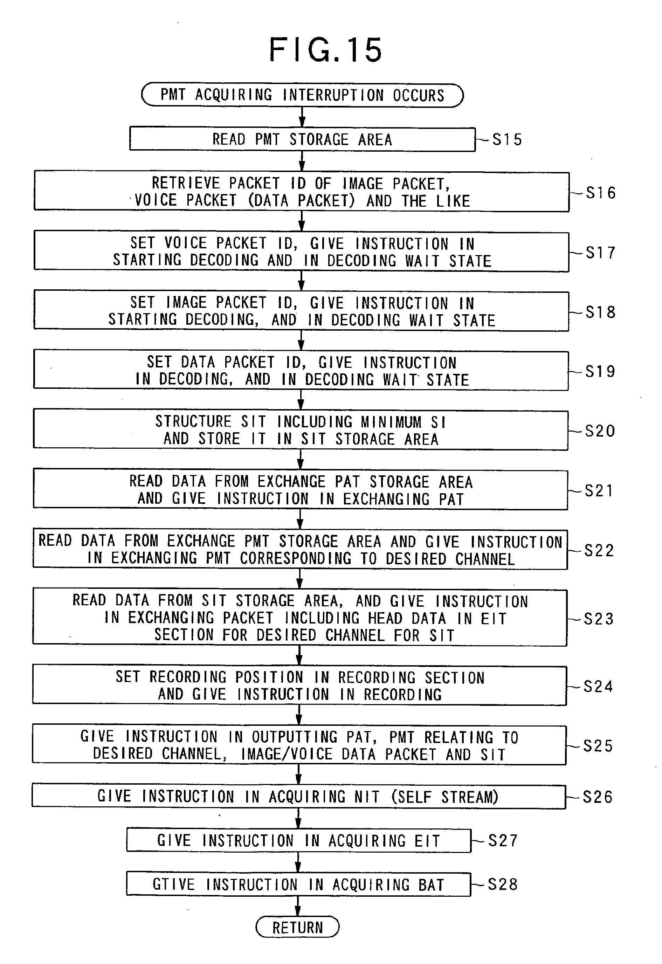

The process for acquiring PMT 31 according to the interruption process is explained concretely below with reference to Fig. 15.

As shown in Fig. 15, in the interruption process for acquiring PMT 32, when the instruction for the interruption process is issued from the demultiplexer 3, the contents of the PMT storage area R103 where the acquired PMT 32 is stored are read (step S15), and PIDs of a packet including image information and a packet including voice information (and a packet including data information if included) are retrieved from the contents of the read PMT 32 (step S16).

The voice decoding section 7 is set so as to receive the packet based on the PID of the packet including the retrieved voice information, and concretely, an instruction of the decoding process is given thereto so that the voice decoding section 7 is brought into a decode standby state (step S17).

The picture image decoding section 6 is set so as to receive the packet based on the PID of the packet including the retrieved picture image information, and concretely, an instruction of the decoding process is given thereto so that the picture image decoding section 6 is brought into a decoding standby state (step S18).

Further, if the received TS 20 includes the packet including data information, the data decoding section 13 is set so as to receive the packet based on the PID of the packet including the retrieved data information. Concretely, an instruction of the decoding process is given thereto so that the data decoding section 13 is brought into a decoding standby state (step S19).

SIT 80 including only the partial TS descriptor 722 and the network identification descriptor 723 is formed from the acquired PMT 32 and is stored in the SIT storage area R109 in the RAM 15 (step S20), and simultaneously new PMT 62 corresponding only to a program to be received is formed so as to be stored in the exchange PMT storage area R108 in the RAM 15.

PAT 61 for recording in the hard disc HD is acquired from the exchange PAT storage area R107, and an instruction for exchanging the PAT 61 for PAT 31 in original TS 20 is output from the microcomputer section 14 to the demultiplexer 3 (step S21) .

PMT 62 for recording in the hard disc HD is acquired from the exchange PMT storage area R108, and an instruction for exchanging PMT 62 for PMT 32 in original TS 20 is output from the microcomputer section 14 to the demultiplexer 3 (step S22).

Contents are acquired from the SIT storage area R109, and an instruction for exchanging a packet including head data of the EIT section for corresponding channel for the acquired S140 is output from the microcomputer section 14 to the demultiplexer 3 (step S23) . At this time, when EIT 41 in original TS 20 carries one section by a plurality of packets, only an instruction for exchanging the packet for starting of the section is given.

Recording positions of various pieces of information in the hard disc HD (packet including new SIT 80, PAT 61 or PMT 62 and information to be entity information F2) are instructed from the microcomputer section 14 to the recording section 2, and an instruction for recording various pieces of information output from the demultiplexer 3 is given (step S24). At this time, descriptors such as the partial TS time descriptor 724 other than the partial TS descriptor 722 and the network identification descriptor 723 which are not included in new SIT 80 are instructed to be recorded as descriptor information S226 in the original program information S102 in corresponding positions on the hard disc HD.

All pieces of information to be actually recorded in the hard disc HD (concretely, new PAT 61, PMT 62, SIT 80 and entity information F2) are output from the demultiplexer 3 and are recorded in specified positions in the hard disc HD by the recording section 2 (step S25). Thereafter, when NIT 42, EIT 41 and BAT 45 are acquired fromoriginal TS 20, areas where acquired NIT 42, EIT 41 and BAT 45 are written are set in predetermined areas in the RAM 15 (in the case of NIT 42, the NIT storage area R104, in the case of EIT 41, the EIT storage area R105, and in the case of BAT 45, the BAT storage area R106), and an instruction for generating interruption in order to notify the acquiring to the microcomputer section 14 is given to the demultiplexer 3.

As a result, the demultiplexer 3 acquires NIT 42, EIT 41 and BAT 45, records the acquired NIT 42, EIT 41 and BAT 45 in predetermined positions, and notifies the interruption to the microcomputer section 14. Accordingly, the interruption process for acquiring NIT 42, EIT 41 and BAT 45 from the microcomputer section 14 can be executed, and one-time interruption process is completed.

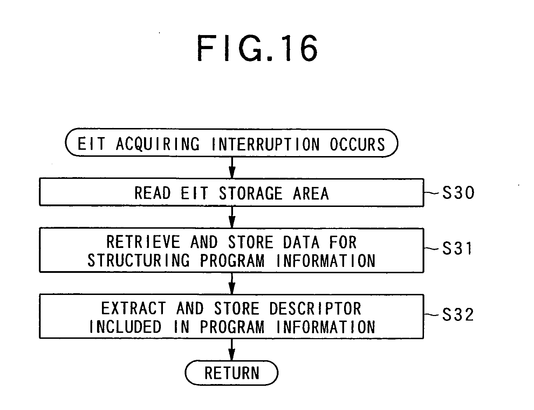

The interruption process which is started when an instruction for reading EIT 41 after acquiring EIT 41 is issued from the demultiplexer 3 is explained concretely below with reference to Fig. 16.

As shown in Fig. 16, in the interruption process for reading EIT 41, when the instruction for the interruption process is issued from the demultiplexer 3 to the microcomputer section 14, contents of the EIT storage area R105 are read (step S30), and data for structuring the program information F1 included in the received TS 20 are retrieved to be stored (step S31). Further, descriptors to be included in the program information F1 are extracted to be stored (step S32), and one-time interruption process is completed.

Immediately after the desired descriptors are acquired by the interruption process, the contents of the original program information S102 are rewritten, and values of respective information are determined.

When the recording process is canceled by the remote controller 12 (YES step S3 in Fig. 13), a series of the recording operation is stopped. At this time, all pieces of information as the program information F1 including the recording time information S232 are determined according to the canceling of the recording so as to be recorded in the hard disc HD.

How original received TS 20 changes at the time when TS 20 is recorded in the hard disc HD as a result of repeating the processes shown in Figs. 13 to 16 is explained below with reference to Fig. 18.

As shown in the top column in Fig. 18, original TS 20 is composed of a picture image packet VPI including picture image corresponding to a first program, a voice packet API including voice corresponding to the first program, PMT 32 corresponding to the first program, a picture image packet VP2 including a picture image corresponding to a second program, a voice packet AP2 including voice corresponding to the second program, PMT 32, PAT 31, EIT 41, NIT 42, SDT 43 and BAT 45 corresponding to the second program. In this case, when the first program is selected for TS 20 and the processes shown in Figs. 13 to 16 are repeated, a packet to be recorded in the hard disc HD includes the picture image packet VP1 corresponding to the first program, the voice packet AP1, PAT 61 and PMT 62 which are exchanged as description contents corresponding to the first program, and SIT 80 including only the partial TS descriptor 722 and the network identification descriptor 723 as the minimum descriptors as shown in the middle column of Fig. 18. The descriptors such as the partial TS time descriptor 724 other than the partial TS descriptor 722 and the network identification descriptor 723 are recorded as the descriptor information S226 in the hard disc HD.

### (C) Embodiment of the Reproducing Operation

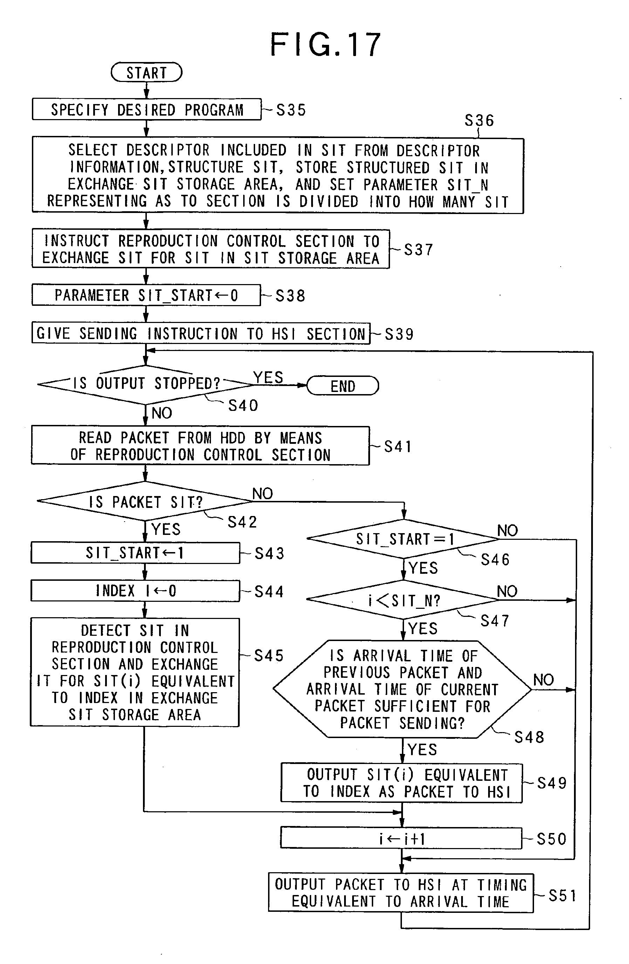

Finally, a process for reproducing information recorded in the hard disc HD and creating the reproduction information Spp to be output to the outside via the HSI section 10 according to the processes shown in Fig. 13 to 16 is explained below with reference to Figs. 17 and 18.

Fig. 17 is a flowchart illustrating the process for reading necessary information from the hard disc HD and outputting it to the outside.

Since the information recorded in the hard disc HD includes SIT 80 having the minimal structure, in the case where this information is transmitted to the outside as the partial TS 50, S170 which includes more information may be structured.

In the reproducing process, when a program to be reproduced and output is specified by the remote controller 12 (step S35), a descriptor which should be included in SIT 71 in the partial TS 50 to be output is selected from the descriptor information S226, and new SIT 71 is formed by using the selected descriptor, and the partial TS descriptor 722 and the network identification descriptor 723 in original SIT 80. SIT 71 is stored in the exchange SIT storage area R110 in the RAM 15, and a parameter SIT#N which represents how many SITs 71 are obtained by dividing the original section is initialized (step S36).

An instruction for exchanging SIT 80 to be read from the hard disc HD for the contents stored in the exchange SIT storage area R110 is issued from the microcomputer section 14 to the reproduction control section 8 (step S37), and a parameter SIT#START is initialized (step S38).

An instruction for transmitting the reproduction information Spp to be read from the hard disc HD to the outside is issued from the microcomputer section 14 to the HSI section 10 (step S39), and a check is made whether an operation for canceling the output is performed by the remote controller 12 (step S40). The operation for canceling the output is performed (YES at step S40), the process is canceled, but when the operation for canceling the output is not performed (NO at step S40), one packet is read from the hard disc HD by the reproduction control section 8 (step S41) so that a check is made whether the read packet is SIT 80 (step S42).

When the packet is SIT 80 (YES at step S42), the value of the parameter SIT#START is set to "1" (step S43), and index I representing numbers of SITs stored in the exchange SIT storage area R110 is initialized (step S44).

The contents of SIT 80 read by the reproduction control section 8 are recognized, and SIT 201 stored in the exchange SIT storage area R110 having index corresponding to SIT 80 is exchanged for original SIT 80 (step S45), and the sequence goes to step S50, mentioned later.

Meanwhile, when the read packet is not SIT 80 in the determination at step S42 (NO at step S42), a check is made whether the value of the parameter SIT#START is "1", namely, the process for exchanging SIT 80 is executed at least once (step S46). When the value of the parameter SIT#START is "1" (YES at step S46), a check is made whether the index I is not more than the parameter SIT#N, namely, the process for exchanging all SIT 80 is completed (S47). When the index I is not more than the parameter SIT#N (YES at step S47), a check is made whether a difference between time at which previous packet arrives at external output destination and time at which the current packet arrives at the external output destination is sufficient for outputting one packet (step S48). When the difference time is sufficient (YES at step S48), SIT 201 corresponding to the current index I is output as a packet to the HSI section 10 (step S49), and the value of the index I is incremented by "1" (step S50), and thereafter another packet is output to the HSI section 110 at timing corresponding to the time at which the packet arrived at the external output destination (step S51). The sequence returns to step S40 in order to repeat the above process on the next packet, and a series of the process is repeated.

Meanwhile, when the value of the parameter SIT#START is not "1" at the determination at step S46, namely, the process for exchanging SIT 80 never been yet executed (NO at step S46), the index I is not the parameter SIT#N or less at the determination at step S47 (N0 at step S47), and the difference between the time at which the previous packet arrives at the external output destination and the time at which the current packet arrives at the external output destination is not sufficient for outputting one packet at the determination at step S48 (NO at step S48), the sequence goes to step S51 so that the process at step S51 is executed.

A change at the time when the information in the hard disc HD is output as the partial TS 50 as a result of repeating the output process shown in Fig. 17 is explained with reference to Fig. 18.

As shown in Fig. 18, the picture image packet VP1, the voice packet AP1, the PAT 61 and the PMT 62 in the information recorded in the hard disc HD are included in the reproduction information Spp as the partial TS 50 to be output directly so as to be output.

In addition, when SIT 80 in the hard disc HD is subject to the processes at steps S42 to S50 in Fig. 17 repeatedly, SIT 80 is included in the reproduction information Spp so as to be output as SIT 71 obtained by adding SIT 201 stored in the exchange SIT storage area R110 to the contents of SIT 80.

As explained above, according to the operation of the receiver R in the embodiment, when a part of TS 20 to be received is recorded in the hard disc HD, SIT 80 is formed only by the partial TS descriptor 722 and the network identification descriptor 723 which are essential as SIT 80 so as to be recorded in the hard disc HD, and descriptors other than the partial TS descriptor 722 and the network identification descriptor 723 are individually recorded. For this reason, information necessary for the hard disc HD can be recorded as a stream only by the process for extracting only the partial TS descriptor 722 and the network identification descriptor 723 from original TS 20, and TS 20 can be recorded in the hard disc HD at a high speed with a simple structure.

In the above embodiment, SIT 80 is formed only by the partial TS descriptor 722 and the network identification descriptor 723, but SIT 80 may be formed by using any one of the other descriptors shown in Fig. 3 as long as they include the partial TS descriptor 722 and the network identification descriptor 723.

Further, since SIT 80 is formed based on SI 40 or the like included in original TS 20, necessary information can be recorded in the hard disc HD with more simple structure.

Since a part of SI 40 in original ST 20 is replaced by SIT 80 to be recorded in the hard disc HD, necessary information can be recorded in the hard disc at a high speed.

Since SIT 80 is replenished with SIT 201 in the exchange SIT storage area R110 so that SIT 71 to be output is formed at the time of output to the outside, partial TS 50 as well as necessary information can be output to the outside.

The programs corresponding to the flowcharts in Figs. 13 to 17 are recorded in an information recording medium such as a flexible disc or a hard disc or are acquired via a network such as internet so as to be recorded, and the programs are read by a general-purpose computer such as CPU so as to be executed. As a result, the general-purpose computer can be served as the microcomputer section 14 according to the embodiment.

### BRIEF DESCRIPTION OF THE DRAWINGS

Figs. 1A and 1B are diagrams illustrating structures of general TS and partial TS;
Fig. 2 is a data structure diagram illustrating a structure of SIT;
Fig. 3 is a diagram illustrating types of descriptors in SIT;
Figs. 4A to 4C are data structure diagrams illustrating structures of the descriptors, Fig. 4A is the data structure diagram illustrating the structure of partial TS descriptor, Fig. 4B is the data structure diagram illustrating the structure of network identification descriptor, and Fig. 4C is the diagram illustrating an example of country codes;
Fig. 5 is a data structure diagram illustrating a structure of partial TS time descriptor;
Fig. 6 is a block diagram illustrating a schematic constitution of a receiver according to an embodiment; Figs. 7A and 7B are diagrams (I) illustrating data structures on a hard disc, Fig. 7A is the diagram (i) illustrating the data structure of program information, and Fig. 7B is the diagram (ii) illustrating the data structure of program information;
Figs. 8A and 8B are diagrams (II) illustrating data structures on the hard disc, Fig. 8A is the diagram (III) illustrating the data structure of program information, and Fig. 8B is the diagram illustrating the data structure of component information;
Figs. 9A and 9B are diagrams (III) illustrating data structures on the hard disc, Fig. 9A is the diagram illustrating the data structure of component group information, and Fig. 9B is the diagram illustrating the data structure of component individual information;
Figs. 10A and 10B are diagrams (IV) illustrating data structures on the hard disc, Fig. 10A is the diagram illustrating the structure of TS packet PT, and Fig. 10B is the diagram illustrating an example of SIT on the hard disc;
Figs. 11A to 11C are diagrams (V) illustrating data structures on the hard disc, Fig. 11A is the data structure diagram illustrating a structure example of partial TS descriptor, Fig. 11B is the data structure diagram illustrating a structure example of network identification descriptor, and Fig. 11C is the data structure diagram illustrating a structure example of partial TS time descriptor;
Fig. 12 is a diagram illustrating a data structure on RAM;
Fig. 13 is a flowchart illustrating a recording process according to an embodiment;
Fig. 14 is a flowchart (I) illustrating an interrupting process in the recording process according to the embodiment;
Fig. 15 is a flowchart (II) illustrating an interrupting process in the recording process according to the embodiment;
Fig. 16 is a flowchart (III) illustrating an interrupting process in the recording process according to the embodiment;
Fig. 17 is a flowchart illustrating an output process according to the embodiment; and
Fig. 18 is a diagram illustrating a change in a stream structure according to the embodiment.

### Discription of Reference Numerals

- 1:: Digital Broadcasting Receiving Section
- 2:: Recording Section
- 3:: Demultiplexer
- 4:: Hard Disc Section
- 5:: Graphics Section
- 6:: Image Decoding Section
- 7:: Voice Decoding Section
- 8:: Reproduction Control Section
- 9:: Osd Section
- 10:: Hsi Section
- 11:: Remote Controller Light Receiving Section
- 12:: Remote Control Section
- 13:: Data Decoding Section
- 14:: Microcomputer
- 15:: Ram
- 20:: Ts
- 50:: Partial Ts
- 71, 80:: Sit
- 722:: Partial Ts Descriptor
- 723:: Network Identification Descriptor
- R:: Receiver
- HD:: Hard Disk

## Claims

1. An information recording apparatus which records a partial information stream createdbased on an information stream acquired from the outside in a recording medium, comprising:
a first creating device which creates partial attribute information based on attribute information included in the information stream;
a first recording device which creates the partial information stream repeatedly including the created partial attribute information so as to record it in the recording medium;
a second creating device which creates attachment attribute information for compensating the partial attribute information based on the attribute information; and
a second recording device which records the created attachment attribute information in the recording medium separately from the partial information stream.

2. The information recording apparatus according to claim 1, wherein the partial attribute information is standardized so as to be included in the partial information stream and be output essentially.

3. The information recording apparatus according to claim 1 or 2, wherein the first recording device replaces a part of the partial information stream with the partial attribute information so as to create the partial information stream.

4. The information recording apparatus according to any one of claims 1 to 3, wherein the information stream is acquired by receiving digitalbroadcasting according to ARIB(Association of Radio Industries and Businesses) standards.

5. A recording medium comprising:
a first recording area where the partial information stream repeatedly including partial attribute information representing at least attribute information of the partial information stream is recorded; and
a second recording area where attachment attribute information for compensating the partial attribute information is recorded.

6. A recording medium reproducing apparatus which reproduces the recording medium according to claim 5, comprising:
a first detecting device which detects the partial information stream recorded in the first recording area;
an extracting device which extracts the partial attribute information from the detected partial information stream;
a second detecting device which detects the attached attribute information recorded in the second recording area;
a first creating device which compensates the extracted partial attribute information based on the attachment attribute information so as to create stream attribute information;
a second creating device which creates partial information stream repeatedly including the created stream attribute information; and
an output device which outputs the created partial information stream.

7. The recording medium reproducing apparatus according to claim 6, wherein the second creating device replaces the partial attribute information included in the partial information stream with the created stream attribute information so as to create the partial stream information.

8. An information recording method of recording partial information stream created based on an information stream acquired from the outside in a recording medium, comprising:
the first creating process for creating partial attribute information based on attribute information included in the information stream;
the first recording process for creating the partial information stream repeatedly including the created partial attribute information so as to recorded it in the recording medium;
the second creating process for creating attachment attribute information for compensating the partial attribute information based on the attribute information; and
the second recording process for recording the created attachment attribute information in the recording medium separately from the partial information stream.

9. A recording medium reproducing method of reproducing the recording medium according to claim 5, comprising:
the first detecting process for detecting the partial information stream recorded in the first recording area;
the extracting process for extracting the partial attribute information from the detected partial information stream;
the second detecting process for detecting the attachment attribute information recorded in the second recording area;
the first creating process for compensating the extracted partial attribute information based on the attachment attribute information so as to create stream attribute information;
the second creating process for creating a partial information stream repeatedly including the created stream attribute information; and
the output process for outputting the created partial information stream.

10. An information recording program which allows an information recording computer included in an information recording apparatus for recording a partial information stream created based on an information stream acquired from the outside in a recording medium to function as:
a first creating device which creates partial attribute information based on attribute information included in the information stream;
a first recording device which creates the partial information stream repeatedly including the created partial attribute information so as to record it in the recording medium;
a second creating device which creates attachment attribute information for compensating the partial attribute information based on the attribute information; and
a second recording device which records the created attachment attribute information in the recording medium separately from the partial information stream.

11. A recording medium reproducing program which allows a recordingmedium reproducing computer included in the recording medium reproducing apparatus according to claim 6 for reproducing the recording medium according to claim 5 to function as:
a first detecting device which detects the partial information stream recorded in the first recording area;
an extracting device which extracts the partial attribute information from the detected partial information stream;
a second detecting device which detects the attachment attribute information recorded in the second recording area;
a first creating device which compensates the extracted partial attribute information based on the attachment attribute information so as to create stream attribute information;
a second creating device which creates a partial information stream repeatedly including the created stream attribute information; and
an output device which outputs the created partial information stream.

12. An information recording medium in which the information recording program according to claim 10 is recorded so as to be readable by the information recording computer.

13. An information recording medium in which the recording medium reproducing program according to claim 11 is recorded so as to be readable by the output computer.
